(19) **Europäisches Patentamt**
**European Patent Office**
**Office européen des brevets**

(11) **EP 4 546 925 A1**

(12) **EUROPEAN PATENT APPLICATION**
published in accordance with Art. 153(4) EPC

(43) Date of publication:
**30.04.2025 Bulletin 2025/18**

(21) Application number: **23826244.8**

(22) Date of filing: **14.06.2023**

(51) International Patent Classification (IPC):
***H04W 74/00*** (2009.01)

(52) Cooperative Patent Classification (CPC):
**H04W 48/08; H04W 48/16; H04W 74/00**

(86) International application number:
**PCT/CN2023/100233**

(87) International publication number:
**WO 2023/246595 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.06.2022 CN 202210710455**

(71) Applicant: **ZTE Corporation
Shenzhen, Guangdong 518057 (CN)**

(72) Inventors:
• **HUANG, Qisheng
Shenzhen, Guangdong 518057 (CN)**
• **WANG, Zisheng
Shenzhen, Guangdong 518057 (CN)**
• **LI, Yan
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **MESSAGE PROCESSING METHOD, NETWORK PROCESSING DEVICE, AND STORAGE MEDIUM**

(57) Provided in the present application are a message processing method, a network processing device, and a storage medium. The message processing method comprises: acquiring message data, which is sent by a plurality of network terminal nodes within a preset active time period (S100); according to a plurality of pieces of message data, determining the number of uplink packets and the number of downlink packets of network access nodes, and determining the number of active network terminal nodes which are currently in an active state (S200); according to the number of uplink packets, the number of downlink packets, and the number of active network terminal nodes, determining first target enhanced distributed channel access adjustment parameters corresponding to the network terminal nodes (S300); and respectively sending the corresponding first target enhanced distributed channel access adjustment parameters to the plurality of network terminal nodes (S400).

Acquire message data sent by the plurality of network terminal nodes within a preset active time period — S100

Determine, according to a plurality of pieces of the message data, a number of uplink packets and a number of downlink packets of the network access node, and determine a number of active network terminal nodes that are currently in an active state — S200

Determine first target enhanced distributed channel access adjustment parameters corresponding to the network terminal nodes according to the number of uplink packets, the number of downlink packets and the number of active network terminal nodes — S300

Send the corresponding first target enhanced distributed channel access adjustment parameters to the plurality of network terminal nodes respectively — S400

FIG.1

Description

CROSS-REFERENCE TO RELATED APPLICATIONS

This application is based upon and claims priority to Chinese Patent Application No. 202210710455.7 filed on June 22, 2022, the entire of which are herein incorporated by reference.

TECHNICAL FIELD

Embodiments of this application relate to, but are not limited to, the technical field of communication, in particular to a message processing method, a network processing device, and a storage medium.

BACKGROUND

Enhanced distributed channel access (EDCA) is an enhanced channel access mechanism specified by the 802.11 protocol suite. Compared with the most original wireless network standard protocol mechanism, quality of service (Qos) is added. However, when the quality of service is used currently, relevant parameters thereof are set fixedly, which makes the performance of the entire network system far from optimal.

SUMMARY

A summary of a subject matter described in detail herein will be provided below. This summary is not intended to limit the protection scope of the claims.

Embodiments of this application provide a message processing method a message, a network processing device, and a storage medium.

In a first aspect, embodiments of this application provide a message processing method, applied to a network access node, where the network access node is connected to a plurality of network terminal nodes, and the message processing method includes: acquiring message data sent by the plurality of network terminal nodes within a preset active time period; determining, according to a plurality of pieces of the message data, the number of uplink packets and the number of downlink packets of the network access node, and determining the number of active network terminal nodes that are currently in an active state; determining first target enhanced distributed channel access adjustment parameters corresponding to the network terminal nodes according to the number of uplink packets, the number of downlink packets and the number of active network terminal nodes; and sending the corresponding first target enhanced distributed channel access adjustment parameters to the plurality of network terminal nodes respectively.

In a second aspect, the embodiments of this application further provide a network processing device, including: a memory, a processor, and a computer program that is stored on the memory and runnable on the processor, where the processor implements the message processing method described above when executing the computer program.

In a third aspect, the embodiments of this application further provide a computer-readable storage medium, storing a computer-executable instruction, where the computer-executable instruction is configured to execute the message processing method described above.

BRIEF DESCRIPTION OF DRAWINGS

Fig. 1 is a flowchart of a message processing method according to an embodiment of this application;

Fig. 2 is a flowchart of a message processing method according to another embodiment of this application; and

Fig. 3 is a flowchart of a message processing method according to yet another embodiment of this application.

DETAILED DESCRIPTION OF THE INVENTION

In order to make objectives, technical solutions, and advantages of the application clearer, the application will be further described below in detail with reference to accompanying drawings and examples. It should be understood that specific examples described herein are merely intended to explain the application rather than limit the application.

It should be noted that although a logical sequence is shown in the flowchart, in some cases, the steps shown or described can be executed in a sequence different from that in the flowchart. The terms "first", "second", etc. in the description, the claims and the accompanying drawings are used to distinguish similar objects, but are not necessarily used to describe a specific sequence or a sequential order.

The embodiments of the application provide a message processing method, a network processing device, and a storage medium. The message processing method includes: message data sent by a plurality of network terminal nodes within a preset active time period are acquired. A number of uplink packets and a number of downlink packets of a network access node are determined according to a plurality of pieces of the message data, and a number of active network terminal nodes that are currently in an active state is determined. First target enhanced distributed channel access adjustment parameters corresponding to the network terminal nodes are determined according to the number of uplink packets, the number of downlink packets and the number of active network terminal nodes. The corresponding first target enhanced distributed channel access adjustment parameters are sent to the plurality of network terminal nodes respectively. The active state of the network terminal node can be quickly determined by using the message data sent within the active time period, and a current data throughput state of the network access node can be determined by using the number of uplink packets and the number of downlink packets. Thus, each network terminal node can dynamically acquire, according to the number of active network terminal nodes that are in the active state, the number of uplink packets and the number of downlink packets, the first target enhanced distributed channel access adjustment parameters sent by the network access node, and an entire system is utilized more rationally.

Herein, in order to elaborate the message processing method, the network processing device, and the storage medium of the application conveniently, an embodiment of the application provides a network system. The network system includes the network access node and the plurality of network terminal nodes, and the plurality of network terminal nodes are all connected to the network access node. The network access node is configured to determine the first target enhanced distributed channel access adjustment parameters, generate the second target enhanced distributed channel access adjustment parameters, and send the first target enhanced distributed channel access adjustment parameters and the second target enhanced distributed channel access adjustment parameters to the plurality of network terminal nodes. The plurality of network terminal nodes may adjust enhanced distributed channel access (EDC) adjustment parameters thereof according to the first target enhanced distributed channel access adjustment parameters and the second target enhanced distributed channel access adjustment parameters that are sent by network access node. The enhanced distributed channel access adjustment parameter is an enhanced channel access mechanism of 802.11, and includes an added quality of service (Qos) mechanism. That is, a voice packet transmission queue (VO), a video stream transmission queue (VI), a best effort transmission queue (BE) and a back ground stream queue (BK) are added. Each network terminal node in each queue has the enhanced distributed channel access adjustment parameter. The enhanced distributed channel access adjustment parameter includes a minimum contention window parameter, a maximum contention window parameter, an arbitration gap parameter and a transmission opportunity parameter. The message processing method of the application can effectively improve the utilization rate of the network by dynamically computing the minimum contention window parameter, the maximum contention window parameter and the arbitration gap parameter.

Based on the network system described above, embodiments of the message processing method of the application are provided. The embodiments of the application will be further elaborated below with reference to the accompanying drawings.

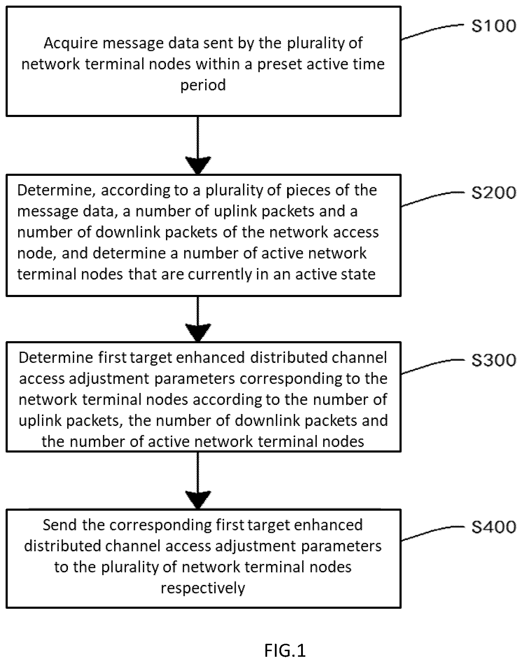

Fig. 1 is a flowchart of a message processing method according to an embodiment of the application. As shown in Fig. 1, the message processing method may include, but is not limited to, S100 to S500.

At S100, message data sent by a plurality of network terminal nodes within a preset active time period are acquired.

At S200, the number of uplink packets and the number of downlink packets of the network access node are determined according to a plurality of pieces of the message data, and the number of active network terminal nodes that are currently in an active state is determined.

At S300, first target enhanced distributed channel access adjustment parameters corresponding to the network terminal nodes are determined according to the number of uplink packets, the number of downlink packets and the number of active network terminal nodes.

At S400, the corresponding first target enhanced distributed channel access adjustment parameters are sent to the plurality of network terminal nodes respectively.

In this embodiment, the plurality of network terminal nodes and network access nodes may send message data to each other, such that the number of uplink packets and the number of downlink packets of the network access node can be determined according to the transmission amount of message data within the active time period. In addition, the network access node can determine whether each network terminal node is in the active state according to data throughput of each network terminal node. The more network access nodes in the active state exist, the shorter average communication time is to be allocated to each active network terminal node in the same network system. In this case, the enhanced distributed channel access adjustment parameters can be increased by using the number of active nodes. On the contrary, the fewer network access nodes in the active state exist, the longer average communication time is to be allocated to each active network terminal node in the same network system. In this case, the enhanced distributed channel access adjustment parameters can be decreased by using the number of active nodes. Finally, an access opportunity is reasonably allocated to each network terminal node, and the condition of passive waiting or waste of an enormous communication capacity due to a fixed setting mode is avoided. In this case, by analyzing the number of uplink packets and the number of downlink packets, a current communication state of the network access node can be determined, and the enhanced distributed channel access adjustment parameters can be adjusted accordingly according to the number of uplink packets and the number of downlink packets. The enhanced distributed channel access adjustment parameters are more reasonably allocated to the network terminal nodes.

In some embodiments, the step that the number of active network terminal nodes that are currently in an active state is determined includes:

the first number of active network terminal nodes corresponding to a voice packet transmission queue, the second number of active network terminal nodes corresponding to a video stream transmission queue, the third number of active network terminal nodes corresponding to a best effort transmission queue, and the fourth number of active network terminal nodes corresponding to a back ground stream queue are determined.

And the number of active network terminal nodes is determined according to the first number, the second number, the third number and the fourth number.

The plurality of network terminal nodes are in different queues, and the network terminal nodes that are in the active state in the voice packet transmission queue, the video stream transmission queue, the best effort transmission queue and the back ground stream queue are determined respectively, such that the first number, the second number, the third number and the fourth number can be obtained. Then, the number of active network terminal nodes that are currently in the active state can be obtained by summing the first number, the second number, the third number and the fourth number.

In some embodiments, the network terminal node that is in the active state is defined as a network terminal node with throughput greater than K Mbps. The K may be set according to actual demand. In some embodiments, a recommended value of K is 24. The active state can be accurately and quickly determined by determining, using the throughput, whether the network terminal node is in the active state.

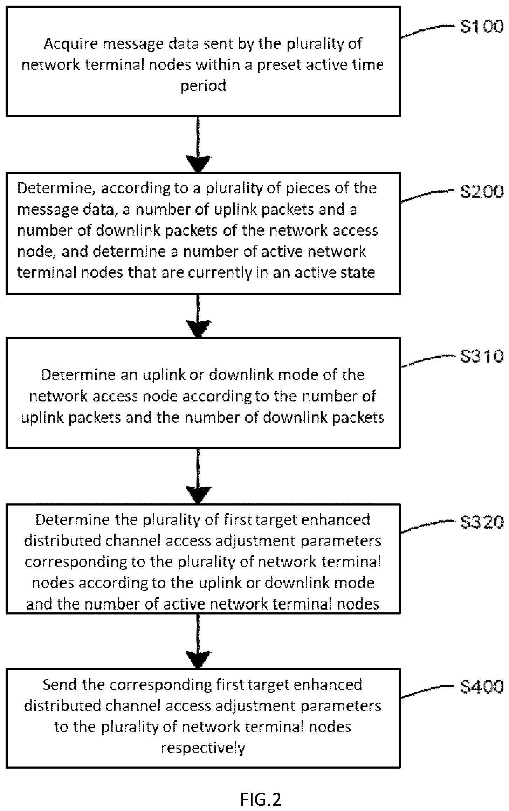

Fig. 2 is a flowchart of a message processing method according to another embodiment of the application. As shown in Fig. 2, S300 includes, but is not limited to, S310 and S320 as follows.

At S310, an uplink downlink mode of a network access node is determined according to a number of uplink packets and a number of downlink packets.

At S320, a plurality of first target enhanced distributed channel access adjustment parameters corresponding to a plurality of network terminal nodes are determined according to the uplink or downlink mode and a number of active network terminal nodes.

The current main working state of the network access node can be determined by using the number of uplink packets and the number of downlink packets. In this case, if computed simply according to the number of active network terminal nodes, the first target enhanced distributed channel access adjustment parameters cannot adapt to a change in the working state of the network access node well. In this embodiment, when the first target enhanced distributed channel access adjustment parameters are computed, whether the network access node is in the uplink mode or the downlink mode is determined by using the number of uplink packets and the number of downlink packets of the network access node, and then the first target enhanced distributed channel access adjustment parameters are computed by using different restriction manners.

In some embodiments, for the network terminal nodes in the voice packet transmission queue, the video stream transmission queue, the best effort transmission queue and the back ground stream queue, the first target enhanced distributed channel access adjustment parameters vary. Thus, the network terminal nodes in different queues can better obtain, according to respective tasks thereof to be processed, the first target enhanced distributed channel access adjustment parameters more reasonably set.

In some embodiments, when the number of uplink packets is greater than the number of downlink packets, the network access node is in the uplink mode. On the contrary, if the number of uplink packets is less than the number of downlink packets, the network access node is in the downlink mode.

In consideration of four different queues, a set of constraint formulas are provided in the embodiment for a method for computing the first target enhanced distributed channel access adjustment parameters in the uplink mode as follows:

$$\mathrm{CWmin_{AC}} = \begin{cases} 1\,, \mathrm{N_{total}} = 1 \\ \mathrm{CN_{AC}} + 2^{\lfloor \mathrm{N_{total}}/2 \rfloor}, \mathrm{N_{total}} > 1 \end{cases}'$$

$$CWmax_{AC} = \begin{cases} 2 \,, N_{total} = 1 \\ CM_{AC} + 2^{\lfloor N_{total}/2 \rfloor}, N_{total} > 1 \end{cases}'$$

$$AIFSN = \begin{cases} 1 \,, N_{total} = 1 \\ AN_{AC} + \min(A_{AC}, \lfloor N_{total}/2 \rfloor), N_{total} > 1 \end{cases}'$$

In the formula, AC denotes one value of {BE, BK, VI, VO},

$CN_{AC}$, $CM_{AC}$, $AN_{AC}$ satisfy the following constraints and are integers:

$$CN_{VO} > CN_{VI} > CN_{BE} > CN_{BK} > 0,$$

$$CM_{VO} > CM_{VI} > CM_{BE} > CM_{BK} > 0,$$

$$AN_{VO} > AN_{VI} > AN_{BE} > AN_{BK} > 0,$$

A computation method of $A_{AC}$ is as follows:

$$A_{AC} = \begin{cases} 2 & AC = VI, VO \\ 3 & AC = BE, BK \end{cases}'$$

It can be seen from the above process that minimum contention window parameters, maximum contention window parameters and arbitration gaps of the voice packet transmission queue, the video stream transmission queue, the best effort transmission queue and the back ground stream queue basically keep decreasing in sequence.

A set of constraint formulas are provided in the embodiment for a method for computing the first target enhanced distributed channel access adjustment parameters in the downlink mode as follows:

$$CWmin_{AC} = \begin{cases} 1 \,, N_{total} = 1 \\ 1 + \lfloor N_{total}/2 \rfloor, N_{total} > 1 \end{cases}'$$

$$CWmax_{AC} = \begin{cases} 2 \,, N_{total} = 1 \\ 2 + \lfloor N_{total}/2 \rfloor, N_{total} > 1 \end{cases}'$$

$$AIFSN_{AC} = \begin{cases} 1 \,, N_{total} = 1 \\ 1 + \min(A_{AC}, \lfloor N_{total}/2 \rfloor), N_{total} > 1 \end{cases}'$$

A computation method of $A_{AC}$ is as follows:

$$A_{AC} = \begin{cases} 2 & AC = VI, VO \\ 3 & AC = BE, BK \end{cases}'$$

It can be seen from the above process that minimum contention window parameters and maximum contention window parameters of the voice packet transmission queue, the video stream transmission queue, the best effort transmission queue and the back ground stream queue remain the same. Arbitration gaps keep a constant basically in a case of a great number of active nodes, and the arbitration gaps of the voice packet transmission queue and the video stream transmission queue need to be smaller than the arbitration gaps of the best effort transmission queue and the back ground stream queue.

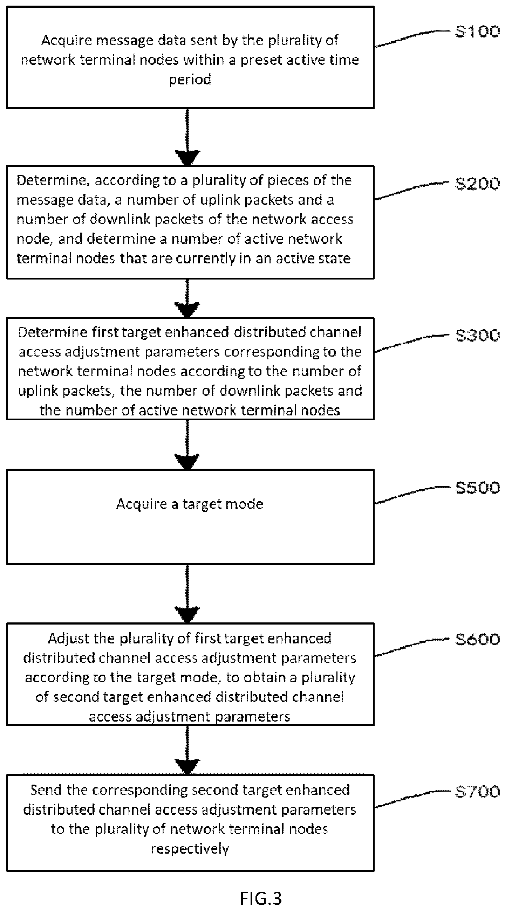

Fig. 3 is a flowchart of a message processing method according to yet another embodiment of the application. As shown in Fig. 3, the message processing method further includes S500 to S700.

At S500: a target mode is acquired.

At S600, a plurality of first target enhanced distributed channel access adjustment parameters are adjusted according to the target mode, to obtain a plurality of second target enhanced distributed channel access adjustment parameters.

At S700, corresponding second target enhanced distributed channel access adjustment parameters are sent to a plurality of network terminal nodes respectively.

Different users will put forward different demand. After the target mode input by the user is acquired, a demand result of the user can be determined by using the target mode, and the second target enhanced distributed channel access adjustment parameters that satisfy the user demand from the user are obtained by adaptively adjusting the first target enhanced distributed channel access adjustment parameters. The second target enhanced distributed channel access adjustment parameters are sent to the network terminal nodes, such that the network terminal nodes can set enhanced distributed channel access adjustment parameters thereof according to the second target enhanced distributed channel access adjustment parameters. In some embodiments, when the target mode input by the user is not detected, the first target enhanced distributed channel access adjustment parameter can be directly used for adjustment, or an initial mode can be selected from a preset mode. When the initial mode is directly selected, the first target enhanced distributed channel access adjustment parameters are not necessarily sent to the network terminal nodes.

In some embodiments, S600 includes, but is not limited to, a step as follows:

In response to that the target mode is an automatic recommendation mode, the plurality of second target enhanced distributed channel access adjustment parameters are obtained by using a pre-established neural network model.

The automatic recommendation mode uses a deep reinforcement learning module to recommend the second target enhanced distributed channel access adjustment parameters. The deep reinforcement learning module includes a neural network model that is pre-trained.

Assuming that the neural network is $NN(s|\theta)$. In the formula, s denotes a normalized statistical vector and $\theta$ denotes a pre-trained hyper-parameter. The statistical vector may be obtained through statistics and normalization according to the number of active network terminal nodes that are currently in the active state, a signal strength of each network terminal node that is in the active state, the number of uplink packets and the number of downlink packets of the network access nodes, etc. Alternatively, the statistical vector may be acquired by considering more relevant parameters according to actual situation. As an input parameter, the statistical vector is input into the neural network model, and a set of three integers all greater than 0, that is, a minimum contention window parameter, a maximum contention window parameter and an arbitration gap parameter corresponding to the second target enhanced distributed channel access adjustment parameters, may be output. The network terminal nodes in different queues may obtain different second target enhanced distributed channel access adjustment parameters according to queues thereof. In addition, in a process of online work, the neural network model may continue to learn regularly by gradient descent and update the hyper-parameter value $\theta$.

In this embodiment, a loss function of the neural network is as follows:

$$\mathrm{Loss}(\theta) = \mathrm{E}((w_1 l_{thp} + w_2 l_{delay} + NN(s'|\theta') - NN(s|\theta))^2),$$

In the formula, $NN(s'|\theta')$ denotes an output of a last iteration, $l_{thp}$ denotes a flow difference between a last moment t' and a present moment t, $l_{delay}$ denotes a delay difference between the last moment t' and the present moment t, $w_1$ and $w_2$ denote adjustable weight parameters having a weight value of 1

In some embodiments, S600 includes, but is not limited to, a step as follows:

The number of all network terminal nodes that are in an active state and have signal strengths over a preset signal strength threshold are determined and a plurality of pairs of associated network terminal nodes are formed in response to that the target mode is a peak traffic generation mode.

And, the plurality of second target enhanced distributed channel access adjustment parameters are determined according to a number of pairs of the associated network terminal nodes and the plurality of first target enhanced distributed channel access adjustment parameters.

In the peak traffic generation mode, the user expects that throughput of an entire network system is as high as possible, such that the first target enhanced distributed channel access adjustment parameters need to be adaptively adjusted. After entering the peak traffic generation mode is determined, signal strength information of all network terminal nodes that are currently in the active state need to be determined at first, and the plurality of network terminal nodes are ranked according to the strength information, such that a plurality of network terminal nodes that have signal strengths over the signal strength threshold can be obtained. Then, the plurality of network terminal nodes are paired into the plurality of pairs of associated network terminal nodes in a method of combining a higher signal strength and a lower signal strength, and then the first target enhanced distributed channel access adjustment parameters can be adjusted according to the number of pairs of associated network terminal nodes. In this embodiment, the greater the number of pairs of associated network terminal nodes is, the smaller the second target enhanced distributed channel access adjustment parameters acquired after adjustment of the first target enhanced distributed channel access adjustment parameters are. Herein, the method of combining a higher signal strength and a lower signal strength is briefly described. That is, in the plurality of network terminal nodes that have the signal strengths over the signal strength threshold, a network terminal node that has a highest signal strength and a network terminal node that has a lowest signal strength are paired into a pair of associated network terminal nodes, a network terminal node that has a second highest signal strength and a network terminal node that has a second lowest signal strength are paired into a pair of associated network terminal nodes, and all pairing is completed in turn similarly.

In this embodiment, an adjustment formula is as follows:

$$CWmin_{AC} = CWmin_{AC} - N_{far-near},$$

$$CWmax_{AC} = CWmax_{AC} - N_{far-near},$$

$$AIFSN_{AC} = AIFSN_{AC} - N_{far-near},$$

In the formula, $N_{far-near}$ denotes the number of pairs of associated network terminal nodes, the left side denotes a minimum contention window parameter, a maximum contention window parameter and an arbitration gap parameter that are obtained through adjustment, and the right side denotes the first target enhanced distributed channel access adjustment parameter. Herein, adjustment will be made according to the network terminal nodes in different queues.

In some embodiments, in the peak traffic generation mode, S600 further includes a step as follows:
The first target enhanced distributed channel access adjustment parameter corresponding to a network terminal node that has a weaker signal strength in each pair of associated network terminal nodes is increased, to obtain the second target enhanced distributed channel access adjustment parameter.

Each pair of associated network terminal nodes may have a near end and a far end due to the signal strength. When the near end and the far end access the network access node in a method of orthogonal frequency division multiple access (OFDMA), access opportunities of a far end user are reduced by increasing the second target enhanced distributed channel access adjustment parameters of a far-end user.

In this embodiment, an adjustment formula is as follows:

$$CWmin_{AC} = (CWmin_{AC} + 1) * 2,$$

$$CWmax_{AC} = (CWmax_{AC} + 1) * 2,$$

$$AIFSN_{AC} = (AIFSN_{AC} + 1) * 2,$$

In the formula, the left side denotes the second target enhanced distributed channel access adjustment parameter adjusted, and numbers 1 and 2 in the formula are both constants, and may be pre-adjusted according to actual adjustment demand.

In some embodiments, S600 includes, but is not limited to, a step as follows:
The number of all network terminal nodes that are in an active state and have signal strengths over a preset signal strength threshold is determined in response to that the target mode is a fairness mode, and a plurality of pairs of associated network terminal nodes are formed.

And, the second target enhanced distributed channel access adjustment parameters are determined according to a number of pairs of the associated network terminal nodes, the plurality of first target enhanced distributed channel access adjustment parameters and a plurality of preset fairness constant groups.

In the fairness mode, the user expects the far end to be preferentially selected, that is, an opportunity of counting the far end increases. In this mode, the associated network terminal nodes need to be established similarly, and an establishment method is substantially same as an establishment method in the peak traffic generation mode. Signal strength information of all network terminal nodes that are currently in the active state need to be determined at first, and the plurality of network terminal nodes are ranked according to the strength information, such that a plurality of network terminal nodes that have signal strengths over the signal strength threshold can be obtained. In this case, the plurality of network terminal nodes can be paired into the plurality of pairs of associated network terminal nodes in a method of combining a higher signal strength and a lower signal strength.

After the network terminal nodes are established, a difference between the first target enhanced distributed channel access adjustment parameter of each network terminal node and the number of pairs of the associated network terminal nodes needs to be considered. If the difference is large, values are re-assigned to the second target enhanced distributed channel access adjustment parameters in one step by using the plurality of preset fairness constant groups. On the contrary, if the difference is small, the second target enhanced distributed channel access adjustment parameters can be directly determined by using the difference.

In this embodiment, an adjustment formula is as follows:

$$\mathrm{CWmin_{AC}} = \min(\mathrm{CWmin_{AC}} - \mathrm{N_{far-near}}, 1),$$

$$\mathrm{CWmax_{AC}} = \min(\mathrm{CWmax_{AC}} - \mathrm{N_{far-near}}, 2),$$

$$\mathrm{AIFSN_{AC}} = \min(\mathrm{AIFSN_{AC}} - \mathrm{N_{far-near}}, 1),$$

In the formula, a left side denotes the second target enhanced distributed channel access adjustment parameter adjusted, numbers 1 and 2 are fairness constants, and specific fairness constants are adaptively adjusted according to actual use demand.

In some embodiments, in the fairness mode, S600 further includes a step as follows:

The first target enhanced distributed channel access adjustment parameter corresponding to a network terminal node that has a weaker signal strength in each pair of associated network terminal nodes is decreased, to obtain the second target enhanced distributed channel access adjustment parameter.

In the fairness mode, each pair of associated network terminal nodes may have a near end and a far end due to the signal strength similarly. When the near end and the far end access the network access node in a method of orthogonal frequency division multiple access (OFDMA), access opportunities of a far end user are increased by decreasing the second target enhanced distributed channel access adjustment parameters of a far-end user.

In this embodiment, an adjustment formula is as follows:

$$\mathrm{CWmin_{AC}} = (\mathrm{CWmin_{AC}} + 1)/2,$$

$$\mathrm{CWmax_{AC}} = (\mathrm{CWmax_{AC}} + 1)/2,$$

$$\mathrm{AIFSN_{AC}} = (\mathrm{AIFSN_{AC}} + 1)/2,$$

In the formula, the left side denotes the second target enhanced distributed channel access adjustment parameter adjusted, and numbers 1 and 2 in the formula are both constants, and may be pre-adjusted according to actual adjustment demand.

In some embodiments, S600 includes, but is not limited to, a step as follows:

Data throughput of two consecutive preset throughput determination time spans are determined and a throughput change rate is determined in response to that the target mode is a throughput stabilization mode.

And, the second target enhanced distributed channel access adjustment parameters are determined according to the throughput change rate, the first target enhanced distributed channel access adjustment parameters and a preset adjustment factor.

In the throughput stabilization mode, the user expects to acquire a stable data stream. In this case, whether the throughput of the entire network system changes greatly needs to be determined. In this case, the first target enhanced distributed channel access adjustment parameters are adjusted according to the throughput change rate, to obtain the second target enhanced distributed channel access adjustment parameters. An appropriate correction can be made during the adjustment with the adjustment factor, so as to guarantee that the second target enhanced distributed channel access adjustment parameters finally obtained can better adapt to demand for the throughput rate.

In some embodiments, the step that the second target enhanced distributed channel access adjustment parameters are determined according to the throughput change rate, the first target enhanced distributed channel access adjustment parameters and a preset adjustment factor includes the following.

In response to that the throughput change rate is greater than a preset throughput rate threshold and data throughput in a second throughput determination time span is less than data throughput in a first throughput determination time span, the first target enhanced distributed channel access adjustment parameter is increased by using the adjustment factor, to obtain the second target enhanced distributed channel access adjustment parameter.

If the throughput change rate is greater than the preset throughput rate threshold, it indicates that the data stream changes greatly, and the enhanced distributed channel access adjustment parameters of the network terminal node need to be adjusted so as to stabilize the throughput. In some embodiments, whether the throughput is increased or decreased can be quickly determined based on the data throughput of the two consecutive throughput determination time spans. When the throughput is decreased, the first target enhanced distributed channel access adjustment parameters needs to be increased by using the adjustment factor to obtain the second target enhanced distributed channel access adjustment parameters. After the network terminal node adjusts parameters thereof according to the second target enhanced distributed channel access adjustment parameters, stability of data transmission can be guaranteed.

In this embodiment, constraint formulas are as follows:

$$CWmin_{AC} = (CWmin_{AC} + 1) *PF,$$

$$CWmax_{AC} = (CWmax_{AC} + 1) *PF,$$

$$AIFSN_{AC} = (AIFSN_{AC} + 1) *PF,$$

In the formula, a value 1 denotes a constant, and may be adjusted according to actual demand, a left side denotes the second target enhanced distributed channel access adjustment parameter, and PF denotes the adjustment factor. The adjustment factor is a constant. In some embodiments, PF is set as 2, and the specific value thereof may be adjusted according to actual demand.

In some embodiments, the step that the second target enhanced distributed channel access adjustment parameters are determined according to the throughput change rate, the first target enhanced distributed channel access adjustment parameters and a preset adjustment factor includes the following.

In response to that the throughput change rate is greater than a preset throughput rate threshold and data throughput in a second throughput determination time span is greater than data throughput in a first throughput determination time span, the first target enhanced distributed channel access adjustment parameter are decreased by using the adjustment factor, to obtain the second target enhanced distributed channel access adjustment parameter.

If the throughput change rate is greater than the preset throughput rate threshold, it indicates that the data stream changes greatly, and the enhanced distributed channel access adjustment parameters of the network terminal node need to be adjusted so as to stabilize the throughput. In some embodiments, whether the throughput is increased or decreased can be quickly determined based on the data throughput of the two consecutive throughput determination time spans. When the throughput is increased, the first target enhanced distributed channel access adjustment parameters needs to be decreased by using the adjustment factor to obtain the second target enhanced distributed channel access adjustment parameters. After the network terminal node adjusts parameters thereof according to the second target enhanced distributed channel access adjustment parameters, stability of data transmission can be guaranteed.

In this embodiment, constraint formulas are as follows:

$$CWmin_{AC} = (CWmin_{AC} + 1)/PF,$$

$$CWmax_{AC} = (CWmax_{AC} + 1)/PF,$$

$$AIFSN_{AC} = (AIFSN_{AC} + 1)/PF,$$

In the formula, a value 1 denotes a constant, and may be adjusted according to actual demand, a left side denotes the second target enhanced distributed channel access adjustment parameter, and PF denotes the adjustment factor. The adjustment factor is a constant. In some embodiments, PF is set as 2, and the specific value thereof may be adjusted according to actual demand.

In order to more clearly describe a processing flow of the message processing method according to the embodiment of the application, a specific instance will be provided below for description.

A network terminal node acquires message data sent by a plurality of network terminal nodes within a preset active time period, and further determines a number of uplink packets and a number of downlink packets of a network access node within the preset active time period. In this case, numbers of active network terminal nodes that are in an active state in four queues may be determined, so as to determine a number of all network terminal nodes.

Signal strengths of the plurality of network terminal nodes are acquired.

An uplink or downlink mode of the network access node is determined according to the number of uplink packets and the number of downlink packets. In the uplink or downlink mode, computation of first target enhanced distributed channel access adjustment parameters needs to be completed by using different constraint formulas, and the specific constraint modes are not repeated herein, for which reference can be made to the embodiments described above.

A target mode input by a user is acquired. The target mode includes at least an automatic recommendation mode, a peak traffic generation mode, a fairness mode or a throughput stabilization mode.

According to different target modes, second target enhanced distributed channel access adjustment parameters are acquired by using different constraint methods, so as to satisfy demand from the user as much as possible.

In the automatic recommendation mode, the plurality of second target enhanced distributed channel access adjustment parameters are obtained by using a pre-established neural network model. At first, main parameters (such as a number of network terminal nodes that are in the active state, the signal strength of the network terminal nodes and throughput) that affect an enhanced distributed channel access adjustment parameter are determined. Then, a statistical vector is acquired by using these parameters. Finally, the statistical vector is used as input into a pre-trained neural network model so as to obtain the second target enhanced distributed channel access adjustment parameters recommended intelligently.

In the peak traffic generation mode, a number of all network terminal nodes that are in the active state and have signal strengths over a preset signal strength threshold is determined, and a plurality of pairs of associated network terminal nodes are formed. The second target enhanced distributed channel access adjustment parameters are obtained by adjusting, using a number of pairs of the associated network terminal nodes, the first target enhanced distributed channel access adjustment parameters. In this case, in consideration of a signal strength relation of each group of associated terminal nodes, the second target enhanced distributed channel access adjustment parameters at a far end are increased. Thus, access opportunities are decreased and entire traffic throughput is guaranteed as high as possible.

In the fairness mode, similarly, the number of all network terminal nodes that are in the active state and have signal strengths over the preset signal strength threshold needs to be determined, and the plurality of pairs of associated network terminal nodes need to be formed. In the fairness mode, a fairness constant is increased, and when a difference between each of a minimum contention window parameter, a maximum contention window parameter and an arbitration gap parameter in the first target enhanced distributed channel access adjustment parameter and the number of pairs of associated network terminal node is great, the fairness constant is used to directly adjust the second target enhanced distributed channel access adjustment parameters, so as to guarantee transmission fairness of the plurality of network terminal nodes. In addition, in consideration of the signal strength relation of each group of associated terminal nodes, the second target enhanced distributed channel access adjustment parameters at the far end are decreased. Thus, access opportunities are increased and entire fairness is guaranteed.

In the throughput stabilization mode, data throughput of two consecutive preset throughput determination time spans is determined, and a throughput change rate is determined. When the throughput changes greatly, it indicates that the throughput fluctuates greatly. In this case, whether the throughput increases or decreases needs to be determined at first. Then, the second target enhanced distributed channel access adjustment parameters are appropriately increased by using an adjustment factor when the throughput decreases, and the second target enhanced distributed channel access adjustment parameters are appropriately decreased by using the adjustment factor when the throughput increases, so as to make the entire data throughput more stable.

By using the number of active network terminal nodes that are in the active state, the signal strength of the network terminal node and the number of uplink packets and the number of downlink packets of the network access node, the enhanced distributed channel access adjustment parameters of the network terminal nodes are dynamically adjusted, and are adjusted adaptively according to mode selection by the user, so as to satisfy demand from the user. In some embodiments, besides the automatic recommendation mode, the peak traffic generation mode, the fairness mode and the throughput stabilization mode, the target mode further includes a user-defined mode. The user can set his/her own constraint formulas of the minimum contention window parameter, the maximum contention window parameter and the arbitration gap parameter according to demand thereof, and satisfy his/her own demand accordingly.

In addition, an embodiment of the application further provides a network processing device. The network processing device includes: a memory, a processor and a computer program that is stored on the memory and runnable on the processor, where the processor implements the method in Figs. 1, 2 and 3 described above when executing the computer program.

A non-transitory software program and an instruction needed to implement the message processing method in the embodiments described above are stored in the memory, and executes the message processing method in the embodiments described above, for example, the method in Figs. 1, 2 and 3 described above when executed by the processor.

In addition, an embodiment of the application further provides a computer-readable storage medium. The computer-readable storage medium stores a computer-executable instruction, where the computer-executable instruction is configured to execute the message processing method described above. For example, when the computer-executable instruction is executed by a processor in the embodiment of the network processing device described above, the processor described above may be caused to execute the message processing method in the embodiment described above, for example, the method in Figs. 1, 2 and 3 described above.

The embodiments of the application includes: the message data sent by the plurality of network terminal nodes within the preset active time period are acquired. The number of uplink packets and the number of downlink packets of the network access node are determined according to the plurality of pieces of the message data, and the number of active network terminal nodes that are currently in the active state is determined. The first target enhanced distributed channel access adjustment parameters corresponding to the network terminal nodes are determined according to the number of uplink packets, the number of downlink packets and the number of active network terminal nodes. The corresponding first target enhanced distributed channel access adjustment parameters are sent to the plurality of network terminal nodes respectively. The active state of the network terminal node can be quickly determined by using the message data sent within the active time period, and a current data throughput state of the network access node can be determined by using the number of uplink packets and the number of downlink packets. Thus, each network terminal node can dynamically acquire, according to the number of active network terminal nodes that are in the active state, the number of uplink packets and the number of downlink packets, the first target enhanced distributed channel access adjustment parameters sent by the network access node, and an entire system is utilized more rationally.

It can be understood by those skilled in the art that all or some steps and systems in the method disclosed above may be implemented as software, firmware, hardware and appropriate combinations thereof. Some physical components or all physical components may be implemented as software executed by the processor, such as a central processing unit, a digital signal processor or a microprocessor, or as hardware, or as an integrated circuit, such as an application-specific integrated circuit. Such software may be distributed on the computer-readable medium. The computer-readable medium may include a computer storage medium (or a non-transitory medium) and a communication medium (or a transitory medium). As well known to those skilled in the art, the term computer storage medium includes volatile, nonvolatile, removable or non-removable media implemented in any method or technology for storing information (such as a computer-readable instruction, a data structure, a program module or other data). The computer storage medium includes, but is not limited to, a random access memory (RAM), a read only memory (ROM), an electrically erasable programmable read-only memory (EEPROM), a flash memory or other storage unit technologies, a compact disc read-only memory (CD-ROM), a digital versatile disc (DVD) or other optical disk storages, magnetic cassettes, magnetic tapes, magnetic disk storages or other magnetic storage apparatuses, or any other media that may be used to store desired information and may be accessed by computers. In addition, it is well known to those skilled in the art that the communication medium typically includes the computer-readable instruction, the data structure, the program module or other data in, for example, a carrier wave or a modulated data signal of another transmission mechanism, and may include any information delivery medium.

### Claims

1. A message processing method, applied to a network access node, the network access node being connected to a plurality of network terminal nodes, and the message processing method comprising:

   acquiring message data sent by the plurality of network terminal nodes within a preset active time period;
   determining, according to a plurality of pieces of the message data, a number of uplink packets and a number of downlink packets of the network access node, and determining a number of active network terminal nodes that are currently in an active state;
   determining first target enhanced distributed channel access adjustment parameters corresponding to the network terminal nodes according to the number of uplink packets, the number of downlink packets and the number of active network terminal nodes; and
   sending the corresponding first target enhanced distributed channel access adjustment parameters to the plurality of network terminal nodes respectively.

2. The message processing method according to claim 1, wherein the determining the number of active network terminal nodes that are currently in an active state comprises:

   determining a first number of active network terminal nodes corresponding to a voice packet transmission queue, a second number of active network terminal nodes corresponding to a video stream transmission queue, a third number of active network terminal nodes corresponding to a best effort transmission queue, and a fourth number of active network terminal nodes corresponding to a back ground stream queue; and

determining the number of active network terminal nodes according to the first number, the second number, the third number and the fourth number.

3. The message processing method according to claim 1, wherein the determining the first target enhanced distributed channel access adjustment parameters corresponding to the network terminal nodes according to the number of uplink packets, the number of downlink packets and the number of active network terminal nodes comprises:

determining an uplink or downlink mode of the network access node according to the number of uplink packets and the number of downlink packets; and

determining the plurality of first target enhanced distributed channel access adjustment parameters corresponding to the plurality of network terminal nodes according to the uplink or downlink mode and the number of active network terminal nodes.

4. The message processing method according to claim 1, further comprising:

acquiring a target mode;

adjusting the plurality of first target enhanced distributed channel access adjustment parameters according to the target mode, to obtain a plurality of second target enhanced distributed channel access adjustment parameters; and

sending the corresponding second target enhanced distributed channel access adjustment parameters to the plurality of network terminal nodes respectively.

5. The message processing method according to claim 4, wherein the adjusting the plurality of first target enhanced distributed channel access adjustment parameters according to the target mode comprises:
obtaining, in response to that the target mode is an automatic recommendation mode, the plurality of second target enhanced distributed channel access adjustment parameters by using a pre-established neural network model.

6. The message processing method according to claim 4, wherein the adjusting the plurality of first target enhanced distributed channel access adjustment parameters according to the target mode comprises:

determining, in response to that the target mode is a peak traffic generation mode, a number of all network terminal nodes that are in an active state and have signal strengths over a preset signal strength threshold, and forming a plurality of pairs of associated network terminal nodes; and

determining the plurality of second target enhanced distributed channel access adjustment parameters according to a number of the pairs of associated network terminal nodes and the plurality of first target enhanced distributed channel access adjustment parameters.

7. The message processing method according to claim 6, wherein the adjusting the plurality of first target enhanced distributed channel access adjustment parameters according to the target mode further comprises:
increasing the first target enhanced distributed channel access adjustment parameter corresponding to a network terminal node that has a weaker signal strength in each pair of the associated network terminal nodes, to obtain the second target enhanced distributed channel access adjustment parameter.

8. The message processing method according to claim 4, wherein the adjusting the plurality of first target enhanced distributed channel access adjustment parameters according to the target mode comprises:

determining, in response to that the target mode is a fairness mode, a number of all network terminal nodes that are in an active state and have signal strengths over a preset signal strength threshold, and forming a plurality of pairs of associated network terminal nodes; and

determining the second target enhanced distributed channel access adjustment parameters according to a number of the pairs of associated network terminal nodes, the plurality of first target enhanced distributed channel access adjustment parameters and a plurality of preset fairness constant groups.

9. The message processing method according to claim 8, wherein the adjusting the plurality of first target enhanced distributed channel access adjustment parameters according to the target mode further comprises:
decreasing the first target enhanced distributed channel access adjustment parameter corresponding to a network terminal node that has a weaker signal strength in each pair of the associated network terminal nodes, to obtain the second target enhanced distributed channel access adjustment parameter.

10. The message processing method according to claim 4, wherein the adjusting the plurality of first target enhanced distributed channel access adjustment parameters according to the target mode comprises:

determining, in response to that the target mode is a throughput stabilization mode, data throughput in two consecutive preset throughput determination time spans and determining a throughput change rate; and determining the second target enhanced distributed channel access adjustment parameters according to the throughput change rate, the first target enhanced distributed channel access adjustment parameters and a preset adjustment factor.

11. The message processing method according to claim 10, wherein the determining the second target enhanced distributed channel access adjustment parameters according to the throughput change rate, the first target enhanced distributed channel access adjustment parameters and the preset adjustment factor comprises:
increasing, in response to that the throughput change rate is greater than a preset throughput rate threshold and data throughput in a second throughput determination time span is less than data throughput in a first throughput determination time span, the first target enhanced distributed channel access adjustment parameter by using the adjustment factor, to obtain the second target enhanced distributed channel access adjustment parameter.

12. The message processing method according to claim 10, wherein the determining the second target enhanced distributed channel access adjustment parameters according to the throughput change rate, the first target enhanced distributed channel access adjustment parameters and the preset adjustment factor comprises:
decreasing, in response to that the throughput change rate is greater than a preset throughput rate threshold and data throughput in a second throughput determination time span is greater than data throughput in a first throughput determination time span, the first target enhanced distributed channel access adjustment parameter by using the adjustment factor, to obtain the second target enhanced distributed channel access adjustment parameter.

13. A network processing device, comprising: a memory, a processor, and a computer program that is stored on the memory and runnable on the processor, wherein the processor implements the message processing method according to any one of claims 1 to 12 when executing the computer program.

14. A computer-readable storage medium, storing a computer-executable instruction, wherein the computer-executable instruction is configured to execute the message processing method according to any one of claims 1 to 12.

Acquire message data sent by the plurality of network terminal nodes within a preset active time period — S100

Determine, according to a plurality of pieces of the message data, a number of uplink packets and a number of downlink packets of the network access node, and determine a number of active network terminal nodes that are currently in an active state — S200

Determine first target enhanced distributed channel access adjustment parameters corresponding to the network terminal nodes according to the number of uplink packets, the number of downlink packets and the number of active network terminal nodes — S300

Send the corresponding first target enhanced distributed channel access adjustment parameters to the plurality of network terminal nodes respectively — S400

FIG.1

Acquire message data sent by the plurality of network terminal nodes within a preset active time period — S100

Determine, according to a plurality of pieces of the message data, a number of uplink packets and a number of downlink packets of the network access node, and determine a number of active network terminal nodes that are currently in an active state — S200

Determine an uplink or downlink mode of the network access node according to the number of uplink packets and the number of downlink packets — S310

Determine the plurality of first target enhanced distributed channel access adjustment parameters corresponding to the plurality of network terminal nodes according to the uplink or downlink mode and the number of active network terminal nodes — S320

Send the corresponding first target enhanced distributed channel access adjustment parameters to the plurality of network terminal nodes respectively — S400

FIG.2

FIG.3

## INTERNATIONAL SEARCH REPORT

| International application No. |
| --- |
| **PCT/CN2023/100233** |

| A. | CLASSIFICATION OF SUBJECT MATTER |
| --- | --- |
| | H04W 74/00(2009.01)i |

According to International Patent Classification (IPC) or to both national classification and IPC

| B. | FIELDS SEARCHED |
| --- | --- |

Minimum documentation searched (classification system followed by classification symbols)
  IPC: H0W, H04Q

Documentation searched other than minimum documentation to the extent that such documents are included in the fields searched

Electronic data base consulted during the international search (name of data base and, where practicable, search terms used)
  CNTXT, CNKI, VEN, CNABS: 增强型分布式信道接入, 调节, 参数, 报文, 个数, 数量, 数目, 激活, 活跃, 阈值, 包数, 上行, 下行, 自动, 调整, 模式, 语音包, 视频流, 尽力传输, 背景流, 队列, BE, VI, BK, EDCA, adjust, parameter, message, number, quantity, activity, threshold, packet upstream, downstream, automatic, mode, voice packet, video stream, best effort transfer, background stream, queue

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 103945436 A (FUJIAN STAR-NET RUIJIE NETWORK CO., LTD.) 23 July 2014 (2014-07-23) description, paragraphs [0061]-[0117] | 1-14 |
| Y | CN 103945441 A (CHENGDU SKSPRUCE TECHNOLOGY, INC.) 23 July 2014 (2014-07-23) description, paragraphs [0029]-[0067] | 1-14 |
| Y | CN 103220726 A (FUJIAN STAR-NET RUIJIE NETWORK CO., LTD.) 24 July 2013 (2013-07-24) description, paragraphs [0023]-[0051] | 1-14 |
| A | CN 114513861 A (HEWLETT PACKARD ENTERPRISE DEVELOPMENT LP) 17 May 2022 (2022-05-17) entire document | 1-14 |
| A | US 2017118770 A1 (QUALCOMM INC.) 27 April 2017 (2017-04-27) entire document | 1-14 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **17 July 2023** | **21 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100233**

| Patent document cited in search report | | | Publication date (day/month/year) | Patent family member(s) | | | Publication date (day/month/year) |
|---|---|---|---|---|---|---|---|
| CN | 103945436 | A | 23 July 2014 | None | | | |
| CN | 103945441 | A | 23 July 2014 | None | | | |
| CN | 103220726 | A | 24 July 2013 | None | | | |
| CN | 114513861 | A | 17 May 2022 | US | 2022159713 | A1 | 19 May 2022 |
| | | | | DE | 102021127579 | A1 | 19 May 2022 |
| US | 2017118770 | A1 | 27 April 2017 | KR | 20180075511 | A | 04 July 2018 |
| | | | | EP | 3369284 | A1 | 05 September 2018 |
| | | | | WO | 2017074666 | A1 | 04 May 2017 |
| | | | | CN | 108141892 | A | 08 June 2018 |
| | | | | IN | 201847009681 | A | 23 March 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210710455